# EUROPÄISCHE PATENTANMELDUNG

(11) **EP 3 750 954 A1**
(43) Veröffentlichungstag der Anmeldung: **16.12.2020**
(21) Anmeldenummer: 19750745.2
(22) Anmeldetag: 02.02.2019
(51) Int. Cl.: C08L 23/16, C08L 23/08, C08K 5/00, D06N 3/04

(54) **ZUSAMMENSETZUNG ZUR HERSTELLUNG EINER TPO-OBERFLÄCHENSCHICHT, DAMIT HERGESTELLTE TPO-OBERFLÄCHENSCHICHT UND KUNSTLEDER**

(30) Priorität: 08.02.2018 CN 201810125876
(71) Anmelder: BENECKE - CHANGSHUN AUTO TRIM (ZHANGJIAGANG) CO., LTD., Zhangjiagang, Jiangsu 215632 (CN)
(72) Erfinder: LI, Shuai, Zhangjiagang, Jiangsu 215632 (CN)
(74) Vertreter: Preusser, Andrea
(86) Internationale Anmeldenummer: PCT/CN2019/074559
(87) Internationale Veröffentlichungsnummer: WO 2019/154354

(57) **Zusammenfassung**

Die vorliegende Erfindung betrifft eine Zusammensetzung zur Herstellung einer TPO-Hautschicht, umfassend die folgenden Komponenten in Gewichtsteilen: 20 - 50 Teile von Polyethylenen, 30 - 60 Teile von Polypropylenen und 20 - 50 Teile von dem Gummi-Elastomer, wobei die gesamten Teile von Polyethylenen, Polypropylenen, und dem Gummi-Elastomer 100 Gewichtsteile betragen, und wobei die Zusammensetzung auch 5 - 50 Teile von einem Antistatikmittel umfasst, bezogen auf sämtliche 100 Gewichtsteile von Polyethylenen, Polypropylenen und dem Gummi-Elastomer. Die Erfindung betrifft auch eine TPO-Hautschicht, die aus der Zusammensetzung zur Herstellung einer TPO-Hautschicht hergestellt ist, sowie ein Kunstleder. Das Kunstleder umfasst eine ein Antistatikmittel enthaltende Hautschicht und eine oberflächliche Lackschicht. Die erfindungsgemäße Hautschicht und das erfindungsgemäße Kunstleder haben jeweils einen oberflächlichen spezifischen Widerstand zwischen 108-1010Ω und einen volumetrischen spezifischen Widerstand zwischen 108-1010Ω•cm, welche Statik effektiv verhindern können.

## Beschreibung

### Technisches Gebiet

Die vorliegende Erfindung betrifft das technische Gebiet der Kunstlederartikel, insbesondere eine Zusammensetzung zur Herstellung einer Hautschicht vom Typ thermoplastischer Polyolefine (TPO), die nachfolgend manchmal auch als Zusammensetzung für TPO-Hautschicht abgekürzt wird, sowie die daraus hergestellte TPO-Hautschicht und Kunstleder.

### Stand der Technik

Ein Kunstleder umfasst in der Regel eine Hautschicht und eine oberflächliche Lackschicht. Die Hautschichten können nach ihren Materialien in TPO-Hautschicht, PVC-Hautschicht und PU-Hautschicht unterteilt sein. Die Kunstlederartikel finden in verschiedenen Bereichen Verwendung, insbesondere für die Dekoration des Innenraums des Fahrzeuges. Mit der Verbreitung und schnellen Entwicklung des Autos erhöhen sich ebenfalls die Anforderungen an die Materialien für die innere Dekoration des Autos allmählich. Zurzeit werden TPOs wegen ihrer Zurückgewinnbarkeit, Leichtbaustrukturen und Umweltfreundlichkeit ein neuartiges Material für die innere Dekoration des Autos, und bieten den inländischen Auto-Herstellern neue Möglichkeiten für die Materialien für die innere Dekoration des Autos an.

Die bisherigen Polyolefin-Materialien sind isolierend und weisen einen großen volumetrischen spezifischen Widerstand und oberflächlichen spezifischen Widerstand, mehr als 10¹²Ω•cm bzw. 10¹²Ω, auf. Je größer der spezifische Widerstand ist, desto stärker werden die Ladungen erzeugt und angesammelt, so dass bei Fertigung, Übertragung, Berührung und Reibung leicht Statik auftreten kann. Die Statik kann wiederum zur Adsorption der Verunreinigungen wie Staub in der Luft an die innere Dekoration und damit zur Verringerung der Ästhetik führen. Zudem kann beim trockenen Bedingungen, wie im Winter, das Vorhandensein der Statik den Kunden Unbequemlichkeit bringen. Außerdem könnte an empfindlichen Orten, wie z. B. an einer Tankstelle, die Erzeugung der Statik ein katastrophales Ergebnis verursachen.

### Offenbarung der Erfindung

Im Hinblick auf die obigen Probleme im Stand der Technik hat der Erfinder umfangreiche und tiefgehende Forschungen über das Kunstleder durchgeführt, um die Entdeckung einer antistatisch effektiven Hautschicht sowie eines daraus hergestellten Kunstleders zu bestreben. Bei den Forschungen wurde herausgefunden, dass im Fall, in dem die Zusammensetzung zur Herstellung der TPO-Hautschicht einen bewussten Anteil von Antistatikmittel enthält, die Hautschicht und das Kunstleder jeweils einen oberflächlichen spezifischen Widerstand zwischen 10⁸-10¹⁰Ω und einen volumetrischen spezifischen Widerstand zwischen 10⁸-10¹⁰Ω•cm aufweisen, was Statik effektiv verhindern kann. Eine Aufgabe der Erfindung ist daher, eine Zusammensetzung zur Herstellung einer TPO-Hautschicht bereitzustellen. Da die Zusammensetzung der Hautschicht ein Antistatikmittel enthält, können die spezifischen Widerstände effektiv reduziert werden, so dass die daraus hergestellte TPO-Hautschicht und die daraus hergestellten Kunstlederartikel ideale spezifische Widerstände aufweisen und die damit verbundenen Unannehmlichkeiten erheblich vermindern.

Eine weitere Aufgabe der Erfindung ist, eine TPO-Hautschicht bereitzustellen, wobei die TPO-Hautschicht aus der erfindungsgemäßen Zusammensetzung zur Herstellung einer TPO-Hautschicht hergestellt wird.

Die letzte Aufgabe der Erfindung ist, ein Kunstleder zu schaffen, das eine ein Antistatikmittel enthaltende Hautschicht und eine oberflächliche Lackschicht umfasst. Die vorgenannte Aufgabe wird erfindungsgemäß durch eine Zusammensetzung zur Herstellung einer TPO-Hautschicht gelöst, welche die folgenden Komponenten in Gewichtsteilen umfasst: 20 - 50 Teile von Polyethylenen, 30 - 60 Teile von Polypropylenen und 20 - 50 Teile von einem Gummi-Elastomer, wobei die gesamten Teile von Polyethylenen, Polypropylenen und dem Gummi-Elastomer 100 Gewichtsteile betragen, und wobei die Zusammensetzung auch ein Antistatikmittel enthält, wobei die Gewichtsteile von dem Antistatikmittel 5 - 50 Teile betragen, bezogen auf sämtliche 100 Gewichtsteile von Polyethylenen, Polypropylenen, und dem Gummi-Elastomer. In einer bevorzugten Ausführungsform für die erfindungsgemäße TPO-Hautschicht wird vorgeschlagen, dass das Antistatikmittel aus innen gemischtem Antistatikmittel von Typ Tensid, dauerhaftem polymerischen Antistatikmittel oder einer Kombination davon ausgewählt ist, und bevorzugt ein dauerhaftes polymerisches Antistatikmittel aus Polyether-Antistatikmittel und Antistatikmittel vom Typ quaternäres Ammoniumsalz, insbesondere IRGASTAT P18 der Firma BASF, ist.

In einer bevorzugten Ausführungsform für die erfindungsgemäße TPO-Hautschicht wird vorgeschlagen, dass die Gewichtsteile von dem Antistatikmittel 10 - 40 Teile, bevorzugt 15 - 30 Teile betragen, bezogen auf sämtliche 100 Gewichtsteile von Polyethylenen, Polypropylenen und dem Gummi-Elastomer.

In einer bevorzugten Ausführungsform für die erfindungsgemäße TPO-Hautschicht wird vorgeschlagen, dass die Zusammensetzung die folgenden Komponenten in Gewichtsteilen umfasst: 20 - 45 Teile von Polyethylenen, 30 - 50 Teile von Polypropylenen und 20 - 45 Teile von dem Gummi-Elastomer, wobei die gesamten Teile von Polyethylenen, Polypropylenen und dem Gummi-Elastomer 100 Gewichtsteile betragen, und dass bevorzugt die Zusammensetzung die folgenden Komponenten in Gewichtsteilen umfasst: 25 - 45 Teile von Polyethylenen, 30 - 50 Teile von Polypropylenen und 25 - 45 Teile von dem Gummi-Elastomer, wobei die gesamten Teile von Polyethylenen, Polypropylenen und dem Gummi-Elastomer 100 Gewichtsteile betragen.

Die vorgenannte Aufgabe wird erfindungsgemäß durch eine TPO-Hautschicht gelöst, wobei die TPO-Hautschicht aus der erfindungsgemäßen Zusammensetzung zur Herstellung einer TPO-Hautschicht hergestellt wird.

Die vorgenannte Aufgabe wird erfindungsgemäß durch ein Kunstleder gelöst, das eine ein Antistatikmittel enthaltende Hautschicht und eine oberflächliche Lackschicht umfasst. In einer bevorzugten Ausführungsform für das erfindungsgemäße Kunstleder wird vorgeschlagen, dass es sich bei der Hautschicht um eine TPO-Hautschicht, die aus der erfindungsgemäßen Zusammensetzung zur Herstellung einer TPO-Hautschicht hergestellt ist, oder um eine erfindungsgemäße TPO-Hautschicht handelt.

In einer bevorzugten Ausführungsform für das erfindungsgemäße Kunstleder wird vorgeschlagen, dass das Kunstleder einen flexiblen Träger umfasst, dessen Innenraum einen Luftspalt aufweist, wobei die TPO-Hautschicht zwischen der oberflächlichen Lackschicht und dem flexiblen Träger angeordnet ist, und dass der flexible Träger vorzugsweise eine Schwammschicht oder eine Maschengewebelage ist.

In einer bevorzugten Ausführungsform für das erfindungsgemäße Kunstleder wird vorgeschlagen, dass die Dicke der Hautschicht 0,2 mm - 1,0 mm beträgt.

In einer bevorzugten Ausführungsform für das erfindungsgemäße Kunstleder wird vorgeschlagen, dass das Kunstleder einen oberflächlichen spezifischen Widerstand zwischen 10⁸ - 10¹⁰Ω und einen volumetrischen spezifischen Widerstand zwischen 10⁸ - 10¹Ω•cm aufweist.

### Beschreibung der Figuren

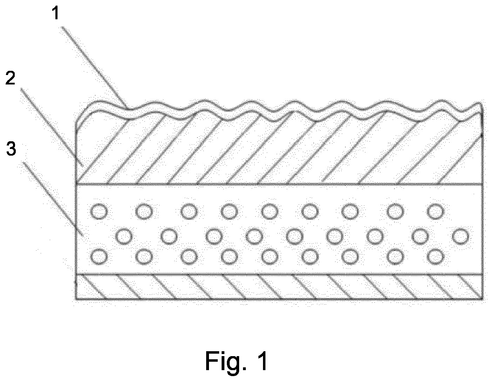

Figur 1 zeigt eine schematische Schnittansicht eines Ausführungsbeispiels des erfindungsgemäßen TPO-Materials für Innenausstattung eines Fahrzeuges, wobei 1 für eine Lackschicht, 2 für eine TPO-Hautschicht, und 3 für eine Schwammschicht steht.

### Ausführliche Ausführungsformen

In einem Aspekt der Erfindung wird eine Zusammensetzung zur Herstellung einer TPO-Hautschicht vorgesehen, welche die folgenden Komponenten in Gewichtsteilen umfasst: 20 - 50 Teile von Polyethylenen, 30 - 60 Teile von Polypropylenen und 20 - 50 Teile von einem Gummi-Elastomer, wobei die gesamten Teile von Polyethylenen, Polypropylenen und dem Gummi-Elastomer 100 Gewichtsteile betragen, und wobei die Zusammensetzung auch ein Antistatikmittel enthält, wobei die Gewichtsteile von dem Antistatikmittel 5 - 50 Teile betragen, bezogen auf sämtliche 100 Gewichtsteile von Polyethylenen, Polypropylenen, und dem Gummi-Elastomer.

Da bei der erfindungsgemäßen Zusammensetzung für die TPO-Hautschicht ein bewusster Anteil von Antistatikmittel in eine übliche Zusammensetzung der TPO-Hautschicht hinzugefügt ist, können die spezifischen Widerstände der daraus hergestellten TPO-Hautschicht und des Kunstleders reduziert werden, so dass die Statikphänomene signifikant verringert oder sogar völlig vermieden werden und endlich die damit verbundenen Unannehmlichkeiten erheblich vermindert oder völlig vermieden werden.

Erfindungsgemäß enthält die Matrix der Zusammensetzung für die TPO-Hautschicht in der Regel Polyethylene, Polypropylene und ein Gummi-Elastomer. Die Auswahl dieser Komponenten ist jeweils herkömmlich in dem technischen Bereich, und all jene Polyethylene, Polypropylene und ein Gummi-Elastomer, die sich für die Zusammensetzung einer TPO-Hautschicht eignen, können in der erfindungsgemäßen Zusammensetzung für die TPO-Hautschicht eingesetzt werden.

Das zahlengemittelte Molgewicht von Polyethylenen ist erfindungsgemäß normalerweise 30.000 - 100.000. Vorteilhaft werden Polyethylene mit einer engen Molgewichtsverteilung, wie z. B. Mn/Mn von 1,0 - 5,0, genutzt. Die Polyethylene können Polyethylene niedriger Dichte sein. Beispielsweise ist es unter dem Handelsnamen LD160 von der Firma Borealis erhältlich.

Das zahlengemittelte Molgewicht von Polypropylenen ist erfindungsgemäß normalerweise 50.000 - 100.000. Vorteilhaft werden Polypropylene mit einer engen Molgewichtsverteilung, wie z. B. Mn/Mn von 1,0 - 5,0, genutzt. Beispielsweise ist es unter dem Handelsnamen RB707CF von der Firma SINOPEC erhältlich.

In der Erfindung kann der Gummi-Elastomer aus natürlichem und synthetischem Kautschuk ausgewählt sein, wobei Letzteres aus Nitrilkautschuk, Styrol-Butadien-Kautschuk, Siliconkautschuk, Ethylen-Propylen-Dien-Kautschuk oder einer Kombination davon ausgewählt sein kann. Beispielsweise ist es unter dem Handelsnamen 3702 von der Firma ExxonMobil erhältlich.

Normalerweise umfasst die erfindungsgemäße Zusammensetzung für die TPO-Hautschicht die folgenden Komponenten in Gewichtsteilen: 20 - 50 Teile von Polyethylenen, 30 - 60 Teile von Polypropylenen, und 20 - 50 Teile von dem Gummi-Elastomer, wobei die gesamten Teile von Polyethylenen, Polypropylenen und dem Gummi-Elastomer 100 Gewichtsteile betragen. In einer bevorzugten Ausführungsform der Erfindung umfasst die erfindungsgemäße Zusammensetzung für die TPO-Hautschicht die folgenden Komponenten in Gewichtsteilen: 20 - 45 Teile von Polyethylenen, 30 - 50 Teile von Polypropylenen und 20 - 45 Teile von dem Gummi-Elastomer, wobei die gesamten Teile von Polyethylenen, Polypropylenen und dem Gummi-Elastomer 100 Gewichtsteile betragen. In einer besonders bevorzugten Ausführungsform der Erfindung umfasst die erfindungsgemäße Zusammensetzung für die TPO-Hautschicht die folgenden Komponenten in Gewichtsteilen: 25 - 45 Teile von Polyethylenen, 30 - 50 Teile von Polypropylenen, und 25 - 45 Teile von dem Gummi-Elastomer.

Die erfindungsgemäße Zusammensetzung für die TPO-Hautschicht zeichnet sich durch das Beinhalten eines zusätzlichen Antistatikmittels, das die Antistatikeigenschaft der daraus hergestellten TPO-Hautschicht und Kunstlederartikel verbessert, aus. Als Antistatikmittel kann in der Regel ein innen gemischtes Antistatikmittel vom Typ Tensid, ein dauerhaftes polymerisches Antistatikmittel oder die Kombination davon eingesetzt werden.

Ein innen gemischtes Antistatikmittel vom Typ Tensid erzielt die Antistatikwirkung durch die Reduzierung des oberflächlichen spezifischen Widerstandes eines Materials mittels Absorption von Wasser in der Umgebung. Solche Antistatikmittel binden an eine Oberfläche des Harzes an, eignen sich für vielfältige Situationen, ohne die Artikel oder die Umgebung zu verunreinigen, und werden hauptsächlich in anionisch, kationisch, zwitterionisch und nicht ionisch unterteilt.

Ein dauerhaftes polymerisches Antistatikmittel weist nach dem Mischen mit einer polymerischen Matrix wegen seiner Molekularkette eine hohe Beweglichkeit auf, was die Bewegung der Protonen begünstigt, so dass die statischen Ladungen durch die Ionen geleitet und freigesetzt werden. Außerdem kann durch die spezielle Dispersionsform eines solchen Antistatikmittels eine Kern-Schale-Struktur in der Matrix erzeugt werden, so dass ein Durchgang zur Freisetzung statischer Ladungen ausgebildet wird und damit der volumetrische spezifische Widerstand des Materials effektiv reduziert wird.

Unter Berücksichtigung der möglichen Beeinträchtigung des Aussehens durch die innen gemischten Antistatikmittel vom Typ Tensid, was zur Fettung und Bewölkung an der Oberfläche führen könnte, wird in der Erfindung bevorzugt ein dauerhaftes polymerisches Antistatikmittel eingesetzt. Das dauerhafte polymerische Antistatikmittel ist bevorzugt aus Polyether-Antistatikmittel, Antistatikmittel vom Typ quaternäres Ammoniumsalz oder dergleichen ausgewählt. Die Polyether-Antistatikmittel beinhalten Polyetheresteramide und Polyethylenoxide. Als Antistatikmittel vom Typ Polyetheresteramide können die Produkte unter dem Handelsnamen Irgastat von der Firma BASF benutzt werden. Als Antistatikmittel vom Typ quaternäres Ammoniumsalz können die Produkte unter dem Handelsnamen Markstat von der amerikanischen Firma Witco benutzt werden.

In einer besonders bevorzugten Ausführungsform der Erfindung wird IRGASTAT P18 von der Firma BASF, ein Antistatikmittel vom Typ Polyetheresteramide, als Antistatikmittel eingesetzt.

In der erfindungsgemäßen Zusammensetzung für die TPO-Hautschicht wird das Antistatikmittel in 5 - 50 Gewichtsteilen, bevorzugt 10 - 40 Gewichtsteilen, bevorzugter 15 - 30 Gewichtsteilen eingesetzt, bezogen auf sämtliche 100 Gewichtsteile von Polyethylenen, Polypropylenen, und dem Gummi-Elastomer. Durch die Versuche hat sich erwiesen, dass das Antistatikmittel gerade in dem Produkt effektiv verteilt war, so dass der oberflächliche spezifische Widerstand wirksam reduziert wird, ohne eine große Beeinträchtigung auf die mechanischen Eigenschaften des Produkts, z. B. Zugfestigkeit und Rissfestigkeit, wenn das Antistatikmittel in 5 - 50 Gewichtsteilen in sämtliche 100 Gewichtsteile von Polyethylenen, Polypropylenen, und dem Gummi-Elastomer zugegeben wurde. Bei einem Anteil des Antistatikmittels von kleiner als 5 Teile wäre das Antistatikmittel in dem Produkt schlecht verteilt und weist einen geringeren Effekt auf die Senkung des oberflächlichen Widerstands auf. Obwohl bei einem Anteil des Antistatikmittels von größer als 50 Teile das Antistatikmittel in dem Produkt effektiv verteilt und der oberflächliche Widerstand effektiv reduziert wäre, steigen die Kosten wegen der übermäßigen Zugabe und verschlechtern das Aussehen und die mechanischen Eigenschaften.

Die erfindungsgemäße Zusammensetzung für die TPO-Hautschicht kann auch weitere Hilfsmittel enthalten, die der TPO-Hautschicht zusätzliche Eigenschaften verleihen. Als solche Hilfsmittel können Antioxidationsmittel, Farb-Masterbatch, usw. genannt werden. Das Antioxidationsmittel kann herkömmlich das in einer Zusammensetzung für TPO-Hautschicht angewandte Antioxidationsmittel sein, z. B. ausgewählt aus Metallseifen, Phenolen, gemischten Estern von Stearinsäure, phosphoriger Säure oder einer Kombination davon. Das Antioxidationsmittel ist unter dem Handelsnamen IRFANOX 1076 von der Firma BASF erhältlich.

Das Antioxidationsmittel wird in der Regel in 1 - 5 Gewichtsteilen, bevorzugt 1 - 4 Gewichtsteilen, eingesetzt, bezogen auf sämtliche 100 Gewichtsteile von Polyethylenen, Polypropylenen, und dem Gummi-Elastomer.

Die Zusammensetzung für die TPO-Hautschicht kann weiterhin ein Farb-Masterbatch enthalten, um ihr eine Farbe zu verleihen. Das Farb-Masterbatch wird herkömmlich ausgewählt, wobei alle Farb-Masterbatches, die in einer Zusammensetzung einer TPO-Hautschicht eingesetzt werden können, hierbei verwendet werden können. Das Farb-Masterbatch ist beispielsweise unter dem Handelsnamen PLOYONE BLACK 1 von der Firma PolyOne erhältlich.

Das Farb-Masterbatch wird in der Regel in 2 - 8 Gewichtsteilen, bevorzugt 3 - 6 Gewichtsteilen eingesetzt, bezogen auf sämtliche 100 Gewichtsteile von Polyethylenen, Polypropylenen, und dem Gummi-Elastomer.

In einer besonders bevorzugten Ausführungsform der Erfindung umfasst die erfindungsgemäße Zusammensetzung für die TPO-Hautschicht die folgenden Komponenten in Gewichtsteilen: 20 - 45 Teile von Polyethylenen, 30 - 50 Teile von Polypropylenen, und 20 - 45 Teile von dem Gummi-Elastomer, wobei die gesamten Teile von Polyethylenen, Polypropylenen und dem Gummi-Elastomer 100 Gewichtsteile betragen, und die Zusammensetzung auch 1 - 4 Gewichtsteile von einem Antioxidationsmittel, 3 - 6 Gewichtsteile von einem Farb-Masterbatch, und 10 - 40 Gewichtsteile von einem Antistatikmittel umfasst, bezogen auf sämtliche 100 Gewichtsteile von Polyethylenen, Polypropylenen, und dem Gummi-Elastomer.

In dem zweiten Aspekt der Erfindung wird eine TPO-Hautschicht vorgesehen, die aus der erfindungsgemäßen Zusammensetzung zur Herstellung einer TPO-Hautschicht hergestellt wird. Die Technologie zur Herstellung einer TPO-Hautschicht aus der Zusammensetzung für die TPO-Hautschicht ist herkömmlich bekannt, z. B. mit einem Mixer, einem Einschneckenextruder oder Doppelschneckenextruder mittels einer Schmelzverarbeitungstechnologie. Da die erfindungsgemäße TPO-Hautschicht ein Antistatikmittel enthält, kann dabei der spezifische Widerstand bis zu den oberflächlichen und volumetrischen spezifischen Widerständen von 10⁸-10¹⁰Ω reduziert werden, was die Antistatikfähigkeit verbessert.

In dem letzten Aspekt der Erfindung wird ein Kunstleder vorgesehen, dadurch gekennzeichnet, dass das Kunstleder eine ein Antistatikmittel enthaltende Hautschicht und eine oberflächliche Lackschicht umfasst. Dadurch, dass das Antistatikmittel in der Hautschicht enthalten ist, kann die oberflächliche Lackschicht das Austreten des Antistatikmittels vermeiden und damit sicherstellen, dass die Kunstlederartikel auch nach langer Zeit noch eine zufriedenstellende Antistatikwirkung aufweisen.

In der Erfindung gelten die für die Kunstleder genannten Antistatikmittel auch für die erfindungsgemäße Zusammensetzung für die TPO-Hautschicht.

Die Hautschicht in dem erfindungsgemäßen Kunstleder kann eine PVC-Hautschicht, eine PU-Hautschicht oder eine TPO-Hautschicht sein. In einer Ausführungsform des erfindungsgemäßen Kunstleders handelt es sich bei der Hautschicht in dem Kunstleder um eine TPO-Hautschicht, die aus der erfindungsgemäßen Zusammensetzung einer TPO-Hautschicht hergestellt ist, oder um eine erfindungsgemäße TPO-Hautschicht.

In einer weiteren Ausführungsform des erfindungsgemäßen Kunstleders umfasst das Kunstleder einen flexiblen Träger, dessen Innenraum einen Luftspalt aufweist, wobei die TPO-Hautschicht zwischen der oberflächlichen Lackschicht und dem flexiblen Träger angeordnet ist. Durch die Bereitstellung eines flexiblen Trägers mit darin vorgesehenen Luftspalten kann das Berührungsgefühl des Kunstleders verbessert und seine Anlage mit einem Stützrahmen begünstigt werden. Die Anordnung der das Antistatikmittel enthaltenden Hautschicht zwischen der oberflächlichen Lackschicht und dem flexiblen Träger kann das Austreten des Antistatikmittels nach innen oder außen verhindern.

Die oberflächliche Lackschicht und der flexible Träger sind herkömmlich bekannt. Bei dem flexiblen Träger handelt es sich bevorzugt um eine Schwammschicht, wie z. B. einen geschäumten Polyethylen-Schwamm, einen geschäumten Polypropylen-Schwamm, oder eine Maschengewebelage, bevorzugt eine dreidimensionale Maschengewebelage. Bei der oberflächlichen Lackschicht handelt es sich bevorzugt um eine wässrige Polyurethan-Beschichtung. Jede wässrige Polyurethan-Beschichtung kann für die Bildung dieser Beschichtung verwendet werden und die Beschichtung ist unter dem Handelsnamen ZHB-378 von der japanischen Firma DIC erhältlich. Die Dicke der oberflächlichen Lackschicht beträgt normalerweise 5µm-20µm. Wenn die Dicke der oberflächlichen Lackschicht weniger als 5 µm beträgt, ist die oberflächliche Lackschicht zu dünn und anfällig für Beschädigung durch Kratzen. Wenn die Dicke der oberflächlichen Lackschicht mehr als 20 µm beträgt, wird die Wirkung des Antistatikmittels stark beeinträchtigt. In einer Ausführungsform des erfindungsgemäßen Kunstleders beträgt die Dicke der Hautschicht 0,2 mm - 1,0 mm. Wenn die Dicke der Hautschicht weniger als 0,2 mm beträgt, könnte das Kunstleder eine schlechte Antistatikwirkung aufweisen, und in diesem Fall würden die Zugfestigkeit, Rissfestigkeit, usw. beeinflusst, wenn zu viel Antistatikmittel zugegeben ist. Wenn die Dicke der Hautschicht weniger als 1,0 mm beträgt, kann das Antistatikmittel nur schwer gleichmäßig verteilt werden, was die Antistatikwirkung des Kunstleders beeinträchtigt.

Die dreilagige Struktur des erfindungsgemäßen Kunstleders ist herkömmlich im Stand der Technik und sie zeichnet sich dadurch aus, dass die mittlere Hautschicht ein Antistatikmittel enthält, insbesondere die erfindungsgemäße TPO-Hautschicht, so dass ein oberflächlicher spezifischer Widerstand von 10⁸-10¹⁰Ω und ein volumetrischer spezifischer Widerstand von 10⁸-10¹⁰Ω•cm erreicht werden. Dadurch wird die Antistatikfähigkeit erheblich verbessert.

Das oben genannte Kunstleder kann nach dem folgenden Verfahren gefertigt werden:
- Extrudieren einer Zusammensetzung zur Herstellung einer Hautschicht eines Kunstleders (wie z. B. die vorgenannte Zusammensetzung für TPO-Hautschicht) in eine Folie von 0,5-1,0 mm in einem Extruder;
- als ein optionaler Schritt, Durchführen einer bevorzugten Corona-Behandlung der Folie, um die Hautschicht zu erhalten; und
- Auftragen einer wässrigen Polyurethan-Beschichtung bevorzugt auf der Oberseite der Hautschicht und einer Schwammschicht auf der Unterseite der Hautschicht.

Die aus der erfindungsgemäßen Zusammensetzung für TPO-Hautschicht hergestellten TPO-Hautschichten und Kunstlederartikel weisen im Vergleich zu den Fällen ohne Antistatikmittel einen reduzierten oberflächlichen spezifischen Widerstand und volumetrischen spezifischen Widerstand auf, wobei der oberflächliche spezifische Widerstand bis zu 10⁸-10¹⁰Ω und der volumetrische spezifische Widerstand bis zu 10⁸-10¹Ω•cm erreichen kann, so dass eine gute Antistatikwirkung erzielt wird.

### Beispiele

Nachfolgend wird die Erfindung durch Beispiele näher beschrieben. Dem Fachmann sollte es klar sein, dass die angegebenen Ausführungsbeispiele nur zur Erklärung der Erfindung dienen, ohne ihren Umfang zu beschränken.

Die Chemikalien und chemischen Mittel in den Ausführungsbeispielen sind kommerziell erhältlich: Polyethylene unter dem Handelsnamen LD160 von der Firma Borealis, Polypropylene unter dem Handelsnamen RB707CF von der Firma SINOPEC, Gummi-Elastomer unter dem Handelsnamen 3702n von der Firma ExxonMobil, Antioxidationsmittel unter dem Handelsnamen IRFANOX 1076 von der Firma BASF, Farb-Masterbatch unter dem Handelsnamen PLOYONE BLACK 1 von der Firma PolyOne, und Antistatikmittel unter dem Handelsnamen IRGASTAT P18 von der Firma BASF.

Die in den folgenden Ausführungsbeispielen erhaltene TPO-Hautschicht und die dekorativen Materialien für den Innenraum eines Fahrzeuges wurden mit dem DSM-9104 Hochohmmeter der Firma Hioki hinsichtlich ihres volumetrischen spezifischen Widerstands und oberflächlichen spezifischen Widerstands bemessen.

### Beispiel 1

Eine Zusammensetzung für eine TPO-Hautschicht wurde formuliert, die die folgenden Komponenten in Gewichtsteilen enthält:

| | |
|---|---|
| Polyethylene | 20 Teile |
| Polypropylene | 35 Teile |
| Gummi-Elastomer | 45 Teile |
| Anti oxi dati onsmittel | 2 Teile |
| Antistatikmittel | 5 Teile |
| Farb-Masterbatch | 4 Teile |

Die Zusammensetzung für die TPO-Hautschicht in diesem Ausführungsbeispiel wurde als Schmelze durch eine Labor-Strangpresse (Labtech LTE20) in eine Folie mit einer Dicke von 0,5 mm extrudiert, wobei die Temperatur der Strangpresse entlang der Richtung vom Einlass zum Auslass 160-220°C betrug, um die TPO-Hautschicht 1 zu erhalten. Die TPO-Hautschicht wies einen volumetrischen spezifischen Widerstand von 10¹Ω•cm und einen oberflächlichen spezifischen Widerstand von 10¹⁰Ω auf.

### Beispiel 2

Eine Zusammensetzung für eine TPO-Hautschicht wurde formuliert, die die folgenden Komponenten in Gewichtsteilen enthält:

| | |
|---|---|
| Polyethylene | 25 Teile |
| Polypropylene | 50 Teile |
| Gummi-Elastomer | 25 Teile |
| Antioxidationsmittel | 3,3 Teile |
| Antistatikmittel | 15 Teile |
| Farb-Masterbatch | 5,3 Teile |

Die Zusammensetzung für die TPO-Hautschicht in diesem Ausführungsbeispiel wurde als Schmelze durch eine Labor-Strangpresse (Labtech LTE20) in eine Folie mit einer Dicke von 0,6mm extrudiert, wobei die Temperatur der Strangpresse entlang der Richtung vom Einlass zum Auslass 160-220°C betrug, um die TPO-Hautschicht 2 zu erhalten. Die TPO-Hautschicht wies einen volumetrischen spezifischen Widerstand von 10⁸Ω•cm und einen oberflächlichen spezifischen Widerstand von 10⁸Ω auf.

### Beispiel 3

Eine Zusammensetzung für eine TPO-Hautschicht wurde formuliert, die die folgenden Komponenten in Gewichtsteilen enthält:

| | |
|---|---|
| Polyethylene | 40 Teile |
| Polypropylene | 40 Teile |
| Gummi-Elastomer | 20 Teile |
| Antioxidationsmittel | 3,5 Teile |
| Antistatikmittel | 30 Teile |
| Farb-Masterbatch | 5 Teile. |

Die Zusammensetzung für die TPO-Hautschicht in diesem Ausführungsbeispiel wurde als Schmelze durch eine Labor-Strangpresse (Labtech LTE20) in eine Folie mit einer Dicke von 0,8mm extrudiert, wobei die Temperatur der Strangpresse entlang der Richtung vom Einlass zum Auslass 160-220°C betrug, um die TPO-Hautschicht 3 zu erhalten. Die TPO-Hautschicht wies einen volumetrischen spezifischen Widerstand von 10⁹Ω•cm und einen oberflächlichen spezifischen Widerstand von 10⁹Ω auf.

### Beispiel 4

Eine Zusammensetzung für eine TPO-Hautschicht wurde formuliert, die die folgenden Komponenten in Gewichtsteilen enthält:

| | |
|---|---|
| Polyethylene | 40 Teile |
| Polypropylene | 30 Teile |
| Gummi-Elastomer | 30 Teile |
| Antioxidationsmittel | 3,3 Teile |
| Antistatikmittel | 27 Teile |
| Farb-Masterbatch | 5,3 Teile |

Die Zusammensetzung für die TPO-Hautschicht in diesem Ausführungsbeispiel wurde als Schmelze durch eine Labor-Strangpresse (Labtech LTE20) in eine Folie mit einer Dicke von 0,8mm extrudiert, wobei die Temperatur der Strangpresse entlang der Richtung vom Einlass zum Auslass 160-220°C betrug, um die TPO-Hautschicht 4 zu erhalten. Die TPO-Hautschicht wies einen volumetrischen spezifischen Widerstand von 10^{8,2}Ω•cm und einen oberflächlichen spezifischen Widerstand von 10^{8,2}Ω auf.

### Beispiel 5

Eine Zusammensetzung für eine TPO-Hautschicht wurde formuliert, die die folgenden Komponenten in Gewichtsteilen enthält:

| | |
|---|---|
| Polyethylene | 45 Teile |
| Polypropylene | 30 Teile |
| Gummi-Elastomer | 25 Teile |
| Antioxidationsmittel | 3,3 Teile |
| Antistatikmittel | 37 Teile |
| Farb-Masterbatch | 5,3 Teile |

Die Zusammensetzung für die TPO-Hautschicht in diesem Ausführungsbeispiel wurde als Schmelze durch eine Labor-Strangpresse (Labtech LTE20) in eine Folie mit einer Dicke von 0,7mm extrudiert, wobei die Temperatur der Strangpresse entlang der Richtung vom Einlass zum Auslass 160-220°C betrug, um die TPO-Hautschicht 5 zu erhalten. Die TPO-Hautschicht wies einen volumetrischen spezifischen Widerstand von 10^{8,1}Ω•cm und einen oberflächlichen spezifischen Widerstand von 10^{8,5}Ω auf.

### Beispiel 6

Eine Zusammensetzung für eine TPO-Hautschicht wurde formuliert, die die folgenden Komponenten in Gewichtsteilen enthält:

| | |
|---|---|
| Polyethylene | 50 Teile |
| Polypropylene | 30 Teile |
| Gummi-Elastomer | 20 Teile |
| Antioxidationsmittel | 3,5 Teile |
| Antistatikmittel | 37 Teile |
| Farb-Masterbatch | 5 Teile. |

Die Zusammensetzung für die TPO-Hautschicht in diesem Ausführungsbeispiel wurde als Schmelze durch eine Labor-Strangpresse (Labtech LTE20) in eine Folie mit einer Dicke von 0,7mm extrudiert, wobei die Temperatur der Strangpresse entlang der Richtung vom Einlass zum Auslass 160-220°C betrug, um die TPO-Hautschicht 6 zu erhalten. Die TPO-Hautschicht wies einen volumetrischen spezifischen Widerstand von 10^{9,2}Ω•cm und einen oberflächlichen spezifischen Widerstand von 10^{9,2}Ω auf.

### Beispiel 7

Die jeweils in den Ausführungsbeispielen 1-6 hergestellten TPO-Hautschichten wurden zur Herstellung von TPO-Materialien für Innenraum-Dekoration eines Fahrzeuges eingesetzt, wobei der Aufbau des Materials von oben nach unten eine wässrige Polyurethan-Beschichtung 1, eine TPO-Hautschicht 2 und eine Schwammschicht 3 umfasst, wie in Fig. 1 ersichtlich ist. Die wässrige Polyurethan-Beschichtung 1 wurde durch die Beschichtung und darauf folgend Härtung der folgenden Komponenten erhalten: 60 Teile von DIC ZHB-378, ein wässriges Harz von Typ Acrylsäure, 0,5 Teile von Carbomer 940, ein Polyacrylsäure-Verdicker, 0,1 Teile von dem Härter Aquolin®268, 30 Teile von Wasser und 0,5 Teile von Kieselsäure.

Das Material für die Schwammschicht war ein geschäumter Polypropylen-Schwamm. Zunächst wurde die resultierende Beschichtungszusammensetzung in einem Walzenbeschichtungsverfahren auf die TPO-Hautschicht aufgetragen und dann getrocknet, um eine TPO-Hautschicht mit einer Lackfolie zu erhalten. Die TPO-Hautschicht mit der Lackfolie wurde danach mit einem Polypropylen-Schwamm bei 160°C thermisch laminiert, um die TPO-Materialien 1-6 für Innenraumdekoration eines Fahrzeuges zu erhalten.

### Beispiel 8

Beispiel 7 wurde wiederholt, aber die Beschichtungszusammensetzung wies die folgenden Komponenten auf: 75 Teile von ZHB-377 von der Firma DIC, ein wässriges Harz vom Typ Acrylsäure, 1,5 Teile von Carbomer 940, ein Polyacrylsäure-Verdicker, 0,5 Teile von dem Härter Aquolin®268, 60 Teile von Wasser und 2 Teile von Kieselsäure. Das Material für die Schwammschicht war ein geschäumter Polypropylen-Schwamm. Zunächst wurde das Beschichtungsmaterial in einem Walzenbeschichtungsverfahren auf die TPO-Hautschicht aufgetragen und dann getrocknet, um eine TPO-Hautschicht mit einer Lackfolie zu erhalten. Die TPO-Hautschicht mit der Lackfolie wurde danach mit einem Polypropylen-Schwamm thermisch laminiert, um die TPO-Materialien 7-12 für Innenraumdekoration eines Fahrzeuges zu erhalten.

### Beispiel 9

Beispiel 7 wurde wiederholt, aber die Beschichtungszusammensetzung wies die folgenden Komponenten auf: 67,5 Teile von WNS-232 von der Firma DIC, eine wässrige Dispersion von Polyurethan, 1,0 Teile von Carbomer 940, ein Polyacrylsäure-Verdicker, 0,3 Teile von dem Isocyanat-Härter Aquolin®268, 45 Teile von Wasser und 1,25 Teile von Kieselsäure. Das Material für die Schwammschicht war ein geschäumter Polyethylen-Schwamm. Zunächst wurde das Beschichtungsmaterial in einem Walzenbeschichtungsverfahren auf die TPO-Hautschicht aufgetragen und dann getrocknet, um eine TPO-Hautschicht mit einer Lackfolie zu erhalten. Die TPO-Hautschicht mit der Lackfolie wurde danach mit einem Polyethylen-Schwamm thermisch laminiert, um die TPO-Materialien 13-18 für Innenraumdekoration eines Fahrzeuges zu erhalten.

Da ein Antistatikmaterial in die Hautschicht hinzugefügt wurde, wiesen die TPO-Hautschichten 1-6 sowie die TPO-Materialien 1-18 für Innenraumdekoration eines Fahrzeuges erheblich gesenkten oberflächlichen spezifischen Widerstand und volumetrischen spezifischen Widerstand sowie eine gute Antistatikwirkung auf. Dadurch werden die Probleme der herkömmlichen TPO-Materialien, dass bei einer Reibung an der Oberfläche leicht Statik erzeugt wird, die Stäube adsorbiert und angesammelt werden und die Sicherheit beeinträchtigt wird, gelöst, so dass nach langer Zeit die Materialien für Dekoration im Fahrzeuginnenraum noch gutaussehend und sicher bleiben. In dem Versuch wurde gezeigt, dass der volumetrische spezifische Widerstand der TPO-Materialien 1-18 für Innenraumdekoration eines Fahrzeuges von 10¹³-10¹⁵Ω•cm zu 10⁸-10¹⁰Ω•cm gesenkt und der oberflächliche spezifische Widerstand von 10¹²-10¹⁴Ω zu 10⁸-10¹⁰Ω gesenkt wurde, so dass die isolierenden Materialien antistatisch geworden waren.

Die obige Beschreibung der veröffentlichten Ausführungsbeispiele ermöglicht es dem Fachmann, die vorliegende Erfindung zu implementieren oder zu benutzen. Viele Modifikationen dieser Ausführungsbeispiele sind naheliegend und das hierin definierte allgemeine Prinzip kann in anderen Ausführungsbeispielen realisiert werden, ohne von dem Sinn und Umfang der Erfindung abzuweichen. Daher soll die Erfindung nicht auf die hierin dargestellten Ausführungsbeispiele beschränkt werden, sondern soll sich an den breitesten Bereich, der mit dem veröffentlichten Prinzip sowie seinen neuartigen Merkmalen übereinstimmt, anpassen.

## Patentansprüche

1. Zusammensetzung zur Herstellung einer TPO-Hautschicht, umfassend die folgenden Komponenten in Gewichtsteilen: 20 - 50 Teile von Polyethylenen, 30 - 60 Teile von Polypropylenen und 20 - 50 Teile von einem Gummi-Elastomer, wobei die gesamten Teile von Polyethylenen, Polypropylenen, und dem Gummi-Elastomer 100 Gewichtsteile betragen, **dadurch gekennzeichnet, dass** die Zusammensetzung auch ein Antistatikmittel enthält, wobei die Gewichtsteile von dem Antistatikmittel 5 - 50 Teile betragen, bezogen auf sämtliche 100 Gewichtsteile von Polyethylenen, Polypropylenen, und dem Gummi-Elastomer.

2. Zusammensetzung nach Anspruch 1, **dadurch gekennzeichnet, dass** das Antistatikmittel aus innen gemischtem Antistatikmittel vom Typ Tensid, dauerhaftem polymerischem Antistatikmittel oder einer Kombination davon ausgewählt ist, und bevorzugt ein dauerhaftes polymerisches Antistatikmittel aus Polyether-Antistatikmittel und Antistatikmittel vom Typ quaternäres Ammoniumsalz, insbesondere IRGASTAT P18 von der Firma BASF, ist.

3. Zusammensetzung nach Anspruch 1 oder 2, **dadurch gekennzeichnet, dass** die Gewichtsteile von dem Antistatikmittel 10 - 40 Teile, bevorzugt 15 - 30 Teile, betragen, bezogen auf sämtliche 100 Gewichtsteile von Polyethylenen, Polypropylenen und dem Gummi-Elastomer.

4. Zusammensetzung nach einem der Ansprüche 1 -3, **dadurch gekennzeichnet, dass** die Zusammensetzung die folgenden Komponenten in Gewichtsteilen umfasst: 20 - 45 Teile von Polyethylenen, 30 - 50 Teile von Polypropylenen und 20 - 45 Teile von dem Gummi-Elastomer, wobei die gesamten Teile von Polyethylenen, Polypropylenen, und dem Gummi-Elastomer 100 Gewichtsteile betragen, und dass bevorzugt die Zusammensetzung die folgenden Komponenten in Gewichtsteilen umfasst: 25 - 45 Teile von Polyethylenen, 30 - 50 Teile von Polypropylenen und 25 - 45 Teile von dem Gummi-Elastomer, wobei die gesamten Teile von Polyethylenen, Polypropylenen, und dem Gummi-Elastomer 100 Gewichtsteile betragen.

5. TPO-Hautschicht, **dadurch gekennzeichnet, dass** die TPO-Hautschicht aus der Zusammensetzung zur Herstellung einer TPO-Hautschicht nach einem der Ansprüche 1-4 hergestellt ist.

6. Kunstleder, **dadurch gekennzeichnet, dass** das Kunstleder eine ein Antistatikmittel enthaltende Hautschicht und eine oberflächliche Lackschicht umfasst.

7. Kunstleder nach Anspruch 6, **dadurch gekennzeichnet, dass** es sich bei der Hautschicht um eine TPO-Hautschicht, die aus der Zusammensetzung zur Herstellung einer TPO-Hautschicht nach einem der Ansprüche 1-4 hergestellt ist, oder um eine TPO-Hautschicht nach Anspruch 5 handelt.

8. Kunstleder nach Anspruch 6 oder 7, **dadurch gekennzeichnet, dass** das Kunstleder einen flexiblen Träger umfasst, dessen Innenraum einen Luftspalt aufweist, wobei die Hautschicht zwischen der oberflächlichen Lackschicht und dem flexiblen Träger angeordnet ist, und dass der flexible Träger vorzugsweise eine Schwammschicht oder eine Maschengewebelage ist.

9. Kunstleder nach einem der Ansprüche 6-9, **dadurch gekennzeichnet, dass** die Dicke der Hautschicht 0,2 mm - 1,0 mm beträgt.

10. Kunstleder nach einem der Ansprüche 6-9, **dadurch gekennzeichnet, dass** das Kunstleder einen oberflächlichen spezifischen Widerstand zwischen 10⁸ - 10¹⁰Ω und einen volumetrischen spezifischen Widerstand zwischen 10⁸ - 10¹⁰Ω•cm aufweist.
